# EUROPEAN PATENT APPLICATION

(11) **EP 4 822 852 A1**
(43) Date of publication of application: **14.10.2026**
(21) Application number: 24929161.8
(22) Date of filing: 13.09.2024
(51) Int. Cl.: H01M 50/244

(54) **POUCH BATTERY AND BATTERY PACK**

(30) Priority: 15.03.2024 CN 202420512378 U
(71) Applicant: Contemporary Amperex Technology Co., Limited, Ningde, Fujian 352100 (CN)
(72) Inventor: LI, Bo, Ningde, Fujian 352100 (CN); LIU, Yang, Ningde, Fujian 352100 (CN); ZHAO, Bin, Ningde, Fujian 352100 (CN); WANG, Tao, Ningde, Fujian 352100 (CN); QIU, Yudong, Ningde, Fujian 352100 (CN)
(74) Representative: Straus, Alexander
(86) International application number: PCT/CN2024/118760
(87) International publication number: WO 2025/189712

(57) **Abstract**

A pouch battery (100) and a battery pack (1000). The pouch battery (100) comprises a pouch battery cell, a top cover (1), a housing (2), and fasteners. Tabs of the pouch battery cell are electrically connected to conductive terminals (1a) of the top cover (1); an accommodating cavity (2a) and a mounting opening (2b) communicated with the accommodating cavity (2a) are formed in the housing (2), the pouch battery cell is arranged in the accommodating cavity (2a), and the top cover (1) covers the mounting opening (2b); the fasteners pass through the housing (2) and the top cover (1) so as to connect the housing (2) and the top cover (1). The pouch battery (100) and the battery pack (1000) have low manufacturing costs.

## Description

### CROSS-REFERENCE TO RELATED APPLICATIONS

The present disclosure is based on and claims priority to Chinese Patent Application No. 202420512378.9, filed on March 15, 2024 and entitled "POUCH BATTERY AND BATTERY PACK", the entire content of which is incorporated herein by reference.

### TECHNICAL FIELD

The present disclosure relates to the technical field of batteries, and more particularly to a pouch battery and a battery pack.

### BACKGROUND

New energy batteries are increasingly widely used in both daily life and industry. New energy batteries are not only applied in energy storage power supply systems such as water power, fire power, wind power, and solar power stations, but also widely applied in electric transportation tools, such as electric bicycles, electric motorcycles and electric vehicles.

In related technologies, the case and top cover of a pouch battery are connected by welding, which is costly.

### SUMMARY OF THE INVENTION

In view of this, embodiments of the present disclosure are intended to provide a pouch battery and a battery pack with low manufacturing costs.

To achieve the aforementioned objective, technical solutions in the embodiments of the present disclosure are implemented as follows:
An aspect of the embodiments of the present disclosure discloses a pouch battery, including a pouch cell, a top cover, a case, and a fastener. Tabs of the pouch cell are electrically connected to conductive terminals of the top cover. The case is formed with a placing cavity and a mounting opening in communication with the placing cavity. The pouch cell is arranged in the placing cavity, and the top cover is arranged to cover the mounting opening. The fastener passes through the case and top cover to connect the case and top cover.

In the above technical solution, by forming a placing cavity inside the case and placing the pouch cell in the placing cavity, on the one hand, it is feasible to protect the pouch cell to a certain extent and improve the service life of the pouch cell; and on the other hand, it is feasible to change the connection mode of the pouch to the connection mode of a square shell, which simplifies the subsequent assembly of the battery pack and makes the operation more convenient. The tabs of the pouch battery are electrically connected to the conductive terminals of the top cover, the top cover is arranged to cover the mounting opening, and the fastener passes through the case and the top cover to connect the case and the top cover. In this way, the case and the top cover are connected via a fastener. Compared with the welding mode, the embodiments of the present disclosure do not need to set a metal welding plate, so that not only can the manufacturing cost of the pouch battery be reduced, but also the connection mode using the fastener is relatively simple and the production efficiency is high.

In one embodiment, the case is formed with a first mounting hole, the top cover is formed with a second mounting hole, and the fastener passes through the first mounting hole and the second mounting hole to connect the top cover and the case.

In the above technical solution, the case and the top cover are connected by the fastener passing through the first mounting hole and the second mounting hole. On the one hand, the structure is simple and easy to operate, without complicated processes or tools; on the other hand, the cooperation between the fastener and the first mounting hole and the second mounting hole can provide strong tension or pressure, thereby improving the connection strength and stability; furthermore, the cooperation mode between the fastener and the first mounting hole and the second mounting hole can be applied to cases and top covers of different materials and thicknesses, making it highly versatile.

In one embodiment, the fastener is a rivet, which connects the top cover and the case by riveting.

In the above embodiments, by inserting the rivet into the first mounting hole and the second mounting hole, the rivet can be riveted between the case and the top cover using a riveting device to achieve a fixed connection. The connection strength is high, which can effectively improve the stability between the case and the top cover. On the other hand, the connection mode through riveting has good shock resistance and impact resistance, and can resist external vibration and impact to maintain the stability of the connection. Furthermore, compared with welding and other modes, the connection mode through riveting is simple and quick to operate, can quickly complete the connection, and has high mounting efficiency.

In one embodiment, the numbers of the first mounting holes, the second mounting holes and the fasteners are all at least two. The at least two first mounting holes are circumferentially spaced and arranged on the case, and the at least two second mounting holes are correspondingly arranged on the top cover. Each fastener passes through the corresponding first mounting hole and the corresponding second mounting hole.

In the above technical solution, by arranging multiple first mounting holes at intervals in the circumferential direction of the case and arranging multiple second mounting holes correspondingly in the circumferential direction of the top cover, with each fastener passing through the corresponding first mounting hole and the corresponding second mounting hole, on the one hand, the connection strength between the case and the top cover can be further improved, and the connection loosening or damage caused by vibration can be reduced; on the other hand, by using multiple fasteners to connect in the circumferential direction, the gap at the connection between the case and the top cover can be reduced, and the air tightness of the placing cavity can be improved.

In one embodiment, the second mounting hole is an oblong hole.

In the above technical solution, by setting the second mounting hole as an oblong hole, on the one hand, it is convenient to align the first mounting hole with the second mounting hole, reducing the assembly difficulty of the fastener and improving the mounting efficiency; on the other hand, by setting the second mounting hole as an oblong hole, compared with setting the first mounting hole as an oblong hole, the situation where the air tightness of the placing cavity is reduced can be avoided.

In one embodiment, the top cover includes a cover body and an abutting plate. The abutting plate is connected to the top surface of the cover body. The projection area of the cover body along the top-bottom direction is located within the projection area of the abutting plate. The second mounting hole is formed in the cover body near the abutting plate. When the first mounting hole and the second mounting hole are aligned, the cover body is located in the placing cavity, and the top surface of the case abuts against the bottom surface of the abutting plate.

In the above technical solution, on the one hand, by abutting the top surface of the case against the bottom surface of the abutting plate, the positioning between the case and the top cover can be completed quickly, which facilitates the alignment of the first mounting hole and the second mounting hole and makes assembly more convenient; on the other hand, by abutting the top surface of the case against the bottom surface of the abutting plate, the abutting plate can block the gap between the cover body and the case to a certain extent, thereby improving the air tightness of the placing cavity.

In one embodiment, the case includes a first side plate, a second side plate, and a third side plate, with the first side plate and the second side plate connected to the two ends of the third side plate along its width direction; both the first side plate and the second side plate are formed with a folded edge at their ends away from the third side plate, and the two folded edges overlap with each other to jointly define the placing cavity.

In the above technical solution, since the case is U-shaped before mounting, the pouch cell connected with the top cover can be placed into the case through the opening of the U-shaped case. Then, the top surface of the case is made abut against the bottom surface of the abutting plate. The position is adjusted so that the first mounting hole and the second mounting hole are aligned. After alignment, the folded edges of the first side plate and the second side plate are overlapped. Finally, the fastener is made pass through the first mounting hole and the second mounting hole to connect the case and the top shell. In this way, compared with directly inserting the pouch cell into the case with a placing cavity in the related technology, the embodiments of the present disclosure adopts the manner of enclosing and wrapping, which not only can reduce the damage of the case to the pouch cell and improve the service life of the pouch cell, but also can make the assembly simple.

In one embodiment, the two folded edges are connected by welding.

In the above technical solution, by connecting the two folded edges through welding, the connection strength between the two folded edges can be improved, reducing the situation where the air tightness of the placing cavity is reduced due to cracking, and resulting in good working stability.

In one embodiment, the case is formed with a communication port in communication with the placing cavity. The mounting opening and the communication port are arranged along the top-bottom direction. The pouch battery includes a bottom cover and a shielding member. The bottom cover is arranged to cover the communication port. The top cover is formed with a pressure relief port that runs through the top-bottom direction. The shielding member is arranged at the pressure relief port. The pressure-bearing capacity of the case and the pressure-bearing capacity of the bottom cover are both greater than the pressure-bearing capacity of the shielding member.

In the above technical solution, by setting the bottom cover at the bottom communication port and the shielding member at the top pressure relief port, impurities and hot ejected gases can be prevented from entering the placing cavity and being transmitted to the pouch cell, thereby avoiding serious thermal runaway problems in the pouch battery. By setting the pressure-bearing capacity of the shielding member to be less than that of the case and of the bottom cover, when a pouch cell experiences thermal runaway, the ejected gas can first cause the shielding member to rupture, thereby directionally directing the gas out from the pressure relief port to avoid explosion or rupture of the pouch battery.

In one embodiment, both the shielding member and the bottom cover are made of mica, but the pressure-bearing capacity of mica of the shielding member is less than that of mica of the bottom cover. The case is made of metal or plastic.

In the above technical solution, by setting the material of the shielding member and the bottom cover as mica and setting the material of the case as metal or plastic, with the pressure-bearing capacity of the mica of the shielding member being less than that of the mica of the bottom cover, when the pouch cell experiences thermal runaway, the gas can break through the shielding member with lower pressure-bearing capacity and be ejected from the pressure relief port, so as to achieve directional ejection of the pouch battery.

In another aspect, the embodiments of the present disclosure disclose a battery pack, the battery pack including a box body and the pouch battery according to any one of the aforementioned embodiments, wherein the box body is formed with an accommodating cavity, and the pouch battery is located in the accommodating cavity.

In the above technical solution, the fastener is used to connect the case and the top cover to form a pouch battery, and the pouch battery is then placed inside the box body. This not only reduces the manufacturing cost of the battery pack, but also simplifies assembly and improves production efficiency.

In one embodiment, the case is formed with a communication port in communication with the placing cavity. The mounting opening and the communication port are arranged along the top-bottom direction. The pouch battery includes a bottom cover, the bottom cover is arranged to cover the communication port, and the top cover is formed with a pressure relief port that runs through the top-bottom direction.

In the above technical solution, by setting the pressure relief port on the top cover, with the pressure relief port being in communication with the placing cavity, when the pouch cell experiences thermal runaway, the high-temperature ejected material (hot ejected gas) can be directionally ejected out from the pressure relief port, avoiding explosion or rupture of the pouch battery and preventing the high temperature of the ejected material from being transferred to other pouch batteries in the battery pack, thereby ensuring high safety. The pressure relief port and the conductive terminal are located on the top cover, so that the pressure relief port can be monitored and inspected at the same time as the conductive terminal is monitored and inspected.

In one embodiment, the number of the pouch batteries is at least two, wherein at least one pouch battery is a first pouch battery and at least one is a second pouch battery, wherein the side of the first pouch battery having conductive terminals is disposed away from the side of the second pouch battery having conductive terminals.

In the above technical solution, the side surface of the first pouch battery having conductive terminals is disposed away from the side surface of the second pouch battery having conductive terminals. This can reduce the accumulation of high voltage at the conductive terminals while achieving directional ejection, so as to avoid the risk of thermal runaway, short circuit or even explosion caused by the accumulation of high voltage of the first pouch battery and the second pouch battery, thus ensuring high safety.

In one embodiment, the first pouch battery and the second pouch battery are arranged along the top-bottom direction, and there are multiple first pouch batteries and multiple second pouch batteries. The multiple first pouch batteries are arranged at intervals along the first direction, and the multiple second pouch batteries are arranged at intervals along the first direction, wherein the top-bottom direction and the first direction are intersected.

In the above technical solution, by the intersecting arrangement, the impact on other pouch batteries in the battery pack can be reduced after thermal runaway occurs in a pouch battery.

In one embodiment, the battery pack further includes an insulating layer, the space between each first pouch battery and the corresponding second pouch battery is filled with the insulating layer, and the insulating layer covers the first pouch battery and the second pouch battery respectively.

In the above technical solution, by providing the insulating layer between the side surface of the first pouch battery away from its conductive terminal and the side surface of the second pouch battery away from its conductive terminal, on the one hand, the first pouch battery and the second pouch battery are insulated from each other, reducing the possibility of short circuits between them; on the other hand, taking the first pouch battery as an example, when a pouch cell experiences thermal runaway, since the pressure relief port is located on the side of the first pouch battery away from the insulating layer, as the ejected material is ejected from the pressure relief port, it will exert a force on the first pouch battery to move closer to the second pouch battery. By providing the insulating layer, it can be blocked and supported to avoid affecting other pouch batteries.

In one embodiment, the cavity wall of the accommodating cavity is formed with an exhaust flow channel and an exhaust vent. The exhaust flow channel is in communication with the accommodating cavity through the exhaust vent, and the exhaust vent is located on the side of the cavity wall of the accommodating cavity facing the accommodating cavity.

In the above technical solution, after the pouch cell experiences thermal runaway, the ejected material is discharged from the pressure relief port into the accommodating cavity, and then enters the exhaust flow channel through the exhaust vent to be discharged, thereby extending the gas flow path and avoiding the situation where the ejected material forms a flame at the end of the exhaust flow channel away from the exhaust vent due to excessive temperature and too short exhaust distance, thus ensuring high safety.

In one embodiment, the first pouch battery and the second pouch battery are arranged along the top-bottom direction, and the exhaust vent is located on the cavity walls of the accommodating cavity on opposite sides along the top-bottom direction.

In the above technical solution, after thermal runaway occurs, both the first pouch battery and the second pouch battery have corresponding exhaust vents to discharge gas into the exhaust flow channel, so the safety is higher.

In one embodiment, the battery pack further includes an explosion-proof valve, and the explosion-proof valve is provided on one or both sides of the box body along the second direction, with the first direction, the second direction and the top-bottom direction intersecting with each other.

In the above technical solution, after thermal runaway occurs in a pouch cell, the ejected material is discharged from the pressure relief port into the accommodating cavity, and then enters the exhaust flow channel through the exhaust vent. When the gas pressure in the accommodating cavity reaches the explosion pressure of the explosion-proof valve, the explosion-proof valve will open the pressure relief port to relieve pressure in the accommodating cavity and avoid explosion, thus improving the operational safety of the battery pack. It should be noted that burst pressure refers to the maximum explosion pressure that the explosion-proof valve can withstand when it is closed.

### DESCRIPTION OF DRAWINGS

FIG. 1 is a schematic structural diagram of a pouch battery provided in an embodiment of the present disclosure, wherein the top cover is not provided at the mounting opening, and the pouch cell and the bottom cover are not shown;
FIG. 2 is a schematic structural diagram of the case shown in FIG. 1;
FIG. 3 is a schematic structural diagram of the top cover shown in FIG. 1; and
FIG. 4 is a schematic structural diagram of a battery pack provided in another embodiment of the present disclosure.

Description of reference numerals:
battery pack 1000; pouch battery 100; first pouch battery 100a; second pouch battery 100b; top cover 1; conductive terminal 1a; second mounting hole 1b; pressure relief port 1c; connecting region 1d; pressure relief region 1e; cover body 11; abutting plate 12; case 2; placing cavity 2a; mounting opening 2b; first mounting hole 2c; folded edge 2d; communication port 2e; first side plate 21; second side plate 22; third side plate 23; shielding member 3; bottom cover 4; box body 200; accommodating cavity 200a; insulating layer 300.

### DETAILED DESCRIPTION

The embodiments of the technical solution of the present disclosure will be described in detail below with reference to the accompanying drawings. The following examples are only used to illustrate the technical solutions of the present disclosure more clearly, and are therefore used only as examples, and should not be used to limit the protection scope of the present disclosure.

Unless otherwise defined, all technical and scientific terms used herein have the same meanings as those commonly understood by those skilled in the art to which the present disclosure belongs. The terms used herein are merely for the purpose of describing specific embodiments, but are not intended to limit the present disclosure. The terms "include" and "have" and any variations thereof in the specification and the claims of the present disclosure as well as the above description of the drawings are intended to cover non-exclusive inclusions.

In the description of the embodiments of the present disclosure, the technical terms "first", "second", "third", and the like, are used only to distinguish between different objects and are not to be understood as indicating or implying a relative importance or implicitly specifying the number, particular order, or primary and secondary relationship of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. Those skilled in the art understand, both explicitly and implicitly, that the embodiments described herein may be combined with other embodiments.

In the description of the embodiments of the present disclosure, unless otherwise clearly specified and defined, technical terms "mount", "connect", "fix", and the like should be broadly understood. For example, the connection may be a fixed connection, a detachable connection, or an integrated connection, may be a mechanical connection or an electrical connection, or may be a direct connection, an indirect connection through an intermediate medium, an internal communication between two elements, or an interaction relationship between two elements. For those of ordinary skills in the art, the specific meanings of the above terms in the embodiments of the present disclosure may be understood based on specific situations.

In the description of the embodiments of the present disclosure, unless otherwise explicitly specified and defined, the technical term "contact" should be understood in a broad sense, which may be direct contact, or contact through an intermediate layer, or contact between two objects with little or no interaction force, or contact between two objects with an interaction force.

At present, new energy batteries are increasingly applied in daily life and industry. New energy batteries are not only applied in energy storage power supply systems such as water power, fire power, wind power, and solar power stations, but also widely applied in electric transportation tools, such as electric bicycles, electric motorcycles and electric vehicles. With the continuous expansion of the application field of power batteries, their market demand is also constantly increasing.

As part of the inventive concept of the present disclosure, before describing the embodiments of the present disclosure, it is necessary to analyze the reasons why the manufacturing cost of a pouch battery is high in related technologies. Through reasonable analysis, the technical solutions of the embodiments of the present disclosure are derived.

In related technologies, the pouch cell is located in the placing cavity of the case, and the top cover is arranged to cover the mounting opening being in communication with the placing cavity. The top cover is provided with conductive terminals for electrical connection with the tabs of the pouch cell. In order to reduce the risk of electrical leakage, the material of the top cover needs to be set as an insulating material. This means that when connecting the case and the top cover, a metal welding plate needs to be mounted on the top cover, which undoubtedly increases the manufacturing cost of the pouch battery.

If a fastener is used to connect the case and top cover, there is no need to use a metal welding plate compared with welding. This not only reduces the manufacturing cost of the pouch battery, but also simplifies the connection process and improves production efficiency.

The solutions of embodiments of the present disclosure can be applied to, but are not limited to, pouch batteries 100 and battery packs 1000 including multiple pouch batteries 100, and can also be applied to hard-cased batteries and battery packs 1000 including multiple hard-cased batteries. The top cover 1 is arranged to cover the mounting opening 2b, and the fastener passes through the case 2 and the top cover 1 to connect the case 2 and the top cover 1. This not only simplifies the connection process, but also reduces the manufacturing cost of the pouch battery 100.

The pouch cell refers to a basic unit whose shell is made of a flexible material and can realize the mutual transformation between chemical energy and electric energy.

In the embodiments of the present disclosure, the pouch cell may be a secondary battery, and the second battery refers to that the battery cell can be used continuously after an active material of the battery cell is activated by charging.

In the embodiments of the present disclosure, the pouch cell may be a lithium ion battery, a sodium ion battery, a sodium/lithium ion battery, a lithium metal battery, a sodium metal battery, a lithium sulfur battery, a magnesium ion battery, a nickel hydrogen battery, a nickel cadmium battery, a lead storage battery, etc., which is not limited in the embodiments of the present disclosure.

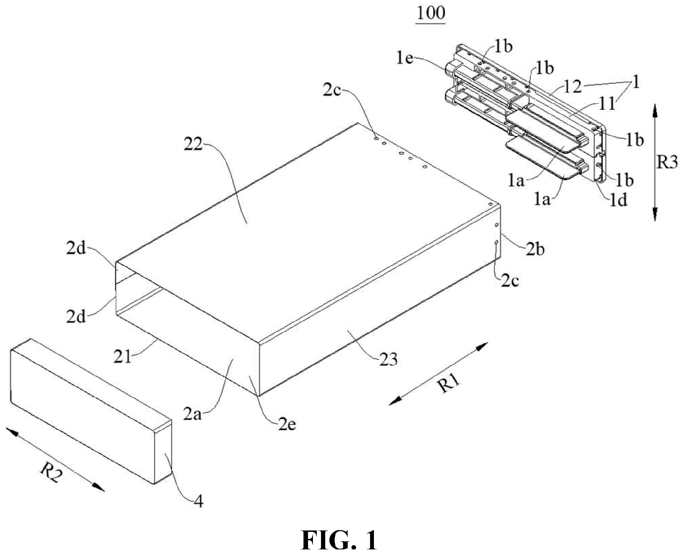

The embodiments of the present disclosure provide a pouch battery 100. Referring to FIGS. 1 to 3, the pouch battery 100 includes a pouch cell, a top cover 1, a case 2, and a fastener. Tabs of the pouch cell are electrically connected to conductive terminals 1a of the top cover 1. The case 2 if formed with a placing cavity 2a and a mounting opening 2b communicating with the placing cavity 2a. The pouch cell is arranged in the placing cavity 2a, and the top cover 1 is arranged to cover the mounting opening 2b. The fastener passes through the case 2 and top cover 1 to connect the case 2 and top cover 1.

The case 2 is used to accommodate the pouch cell, providing it with some protection and reducing the risk of damage to the exposed pouch cell.

The placing cavity 2a refers to an accommodating space inside the case 2, which is configured to accommodate the pouch cell.

The fastener refers to a component or a part that connects two or more parts together to prevent them from separating.

The top cover 1 refers to a structure used to block the mounting opening 2b. When the pouch cell is placed into the placing cavity 2a, the top cover 1 is arranged to cover the mounting opening 2b to block the mounting opening 2b, so as to prevent the pouch cell from coming out of the case 2 from the mounting opening 2b as much as possible.

The conductive terminal 1a refers to a part used to connect with the tab to bring out the positive and negative electrodes of the pouch cell outside the case 2 for subsequent connection. For example, the conductive terminal 1a can be a busbar.

With the pouch battery 100 provided in the present disclosure, by forming a placing cavity 2a inside the case 2 and placing the pouch cell in the placing cavity 2a, on the one hand, it is feasible to protect the pouch cell to a certain extent and improve the service life of the pouch cell; and on the other hand, it is feasible to change the connection mode of the pouch to the connection mode of a square shell, which simplifies the subsequent assembly of the battery pack 1000 and makes the operation more convenient. The tabs of the pouch battery 100 are electrically connected to the conductive terminals 1a of the top cover 1, the top cover 1 is arranged to cover the mounting opening 2b, and the fastener passes through the case 2 and the top cover 1 to connect the case 2 and the top cover 1. In this way, the case 2 and the top cover 1 are connected via a fastener. Compared with the welding mode, the embodiments of the present disclosure do not need to set a metal welding plate, so that not only can the manufacturing cost of the pouch battery 100 be reduced, but also the connection mode using the fastener is relatively simple and the production efficiency is high.

By way of example, in one embodiment, the number of the pouch cells is not limited. For instance, the number of the pouch cells can be four, and the four pouch cells are placed in a placing cavity 2a to improve the energy density of the pouch battery 100.

In one embodiment, referring to FIG. 1, the case 2 is formed with a first mounting hole 2c, the top cover 1 is formed with a second mounting hole 1b, and the fastener passes through the first mounting hole 2c and the second mounting hole 1b to connect the top cover 1 and the case 2.

By way of example, the side surfaces of the case 2 along the first direction and the second direction are both formed with a first mounting hole 2c, and the side surfaces of the top cover 1 along the first direction and the second direction are both formed with a second mounting hole 1b. The fastener passes through the first mounting hole 2c and the second mounting hole 1b in sequence, and then connect the top cover 1 and the case 2.

It should be noted that the first direction is perpendicular to the top-bottom direction. For example, the first direction can be the length direction, and the second direction can be the width direction. Top refers to the direction towards the top cover 1, and bottom is the opposite of top. The top-bottom direction, width direction, and length direction are perpendicular to each other, forming a three-dimensional vertical coordinate system.

It should be noted that, in FIG. 1, R1 may be the top-bottom direction, R2 may be the length direction, and R3 may be the width direction.

In this way, the case 2 and the top cover 1 are connected by the fastener passing through the first mounting hole 2c and the second mounting hole 1b. On the one hand, the structure is simple and easy to operate, without complicated processes or tools; on the other hand, the cooperation between the fastener and the first mounting hole 2c and the second mounting hole 1b can provide strong tension or pressure, thereby improving the connection strength and stability; furthermore, the cooperation mode between the fastener and the first mounting hole 2c and the second mounting hole 1b can be applied to cases 2 and top covers 1 of different materials and thicknesses, making it highly versatile.

In one embodiment, the fastener is a rivet, which connects the top cover 1 and the case 2 by riveting.

In this way, by inserting the rivet into the first mounting hole 2c and the second mounting hole 1b, the rivet can be riveted between the case 2 and the top cover 1 using a riveting device to achieve a fixed connection. The connection strength is high, which can effectively improve the stability between the case 2 and the top cover 1. On the other hand, the connection mode through riveting has good shock resistance and impact resistance, and can resist external vibration and impact to maintain the stability of the connection. Furthermore, compared with welding and other modes, the connection mode through riveting is simple and quick to operate, can quickly complete the connection, and has high mounting efficiency.

By way of example, in one embodiment, the first mounting hole 2c and the second mounting hole 1b can be round holes or other special-shaped holes, depending on the shape of the fastener, so that the air tightness of the placing cavity 2a can be improved.

In one embodiment, referring to FIG. 1, the numbers of the first mounting holes 2c, the second mounting holes 1b and the fasteners are all at least two. The at least two first mounting holes 2c are circumferentially spaced and arranged on the case 2, and the at least two second mounting holes 1b are correspondingly arranged on the top cover 1. Each fastener passes through the corresponding first mounting hole 2c and the corresponding second mounting hole 1b.

By way of example, the number of the second mounting holes 1b can be sixteen, with twelve of the second mounting holes 1b provided on the two end faces of the top cover 1 along the width direction, six on each end, and the other four of the second mounting holes 1b provided on the two end faces of the top cover 1 along the length direction, two on each end. The numbers of first mounting holes 2c and the fasteners can also be sixteen. The sixteen first mounting holes 2c are provided at corresponding positions on the case 2, and each fastener passes through the corresponding first mounting hole 2c and the corresponding second mounting hole 1b.

In this way, by arranging multiple first mounting holes 2c at intervals in the circumferential direction of the case 2 and arranging multiple second mounting holes 1b correspondingly in the circumferential direction of the top cover 1, with each fastener passing through the corresponding first mounting hole 2c and the corresponding second mounting hole 1b, on the one hand, the connection strength between the case 2 and the top cover 1 can be further improved, and the connection loosening or damage caused by vibration can be reduced; on the other hand, by using multiple fasteners to connect in the circumferential direction, the gap at the connection between the case 2 and the top cover 1 can be reduced, and the air tightness of the placing cavity 2a can be improved.

In one embodiment, the second mounting hole 1b is an oblong hole. In this way, by setting the second mounting hole 1b as an oblong hole, on the one hand, it is convenient to align the first mounting hole 2c with the second mounting hole 1b, reducing the assembly difficulty of the fastener and improving the mounting efficiency; on the other hand, by setting the second mounting hole 1b as an oblong hole, compared with setting the first mounting hole 2c as an oblong hole, the situation where the air tightness of the placing cavity 2a is reduced can be avoided.

In one embodiment, referring to FIG. 1, the top cover 1 includes a cover body 11 and an abutting plate 12. The abutting plate 12 is connected to the top surface of the cover body 11. The projection area of the cover body 11 along the top-bottom direction is located within the projection area of the abutting plate 12. The second mounting hole 1b is formed in the cover body 11 near the abutting plate 12. When the first mounting hole 2c and the second mounting hole 1b are aligned, the cover body 11 is located in the placing cavity 2a, and the top surface of the case 2 abuts against the bottom surface of the abutting plate 12.

By way of example, the projection area of the cover body 11 along the top-bottom direction is located within the projection area of the abutting plate 12, which means that the abutting plate 12 protrudes outward from the cover body 11 along the circumferential direction so that the two form a step. The conductive terminal 1a is disposed on the bottom surface of the cover body 11. The second mounting hole 1b is disposed on the cover body 11 near the abutting plate 12 along the top-bottom direction.

In this way, on the one hand, during mounting, by abutting the top surface of the case 2 against the bottom surface of the abutting plate 12, the positioning between the case 2 and the top cover 1 can be completed quickly, which facilitates the alignment of the first mounting hole 2c and the second mounting hole 1b and makes assembly more convenient; on the other hand, by abutting the top surface of the case 2 against the bottom surface of the abutting plate 12, the abutting plate 12 can block the gap between the cover body 11 and the case 2 to a certain extent, thereby improving the air tightness of the placing cavity 2a.

By way of example, in one embodiment, the shape of the abutting plate 12 is not limited; for example, it can be rectangular, square, or other irregular shapes.

In related technologies, when mounting a pouch cell, the pouch cell is directly inserted into a case with a placing cavity through the mounting opening. During the insertion process, the cavity wall of the placing cavity will scrape against the surface of the pouch cell, which can easily cause damage to the pouch cell.

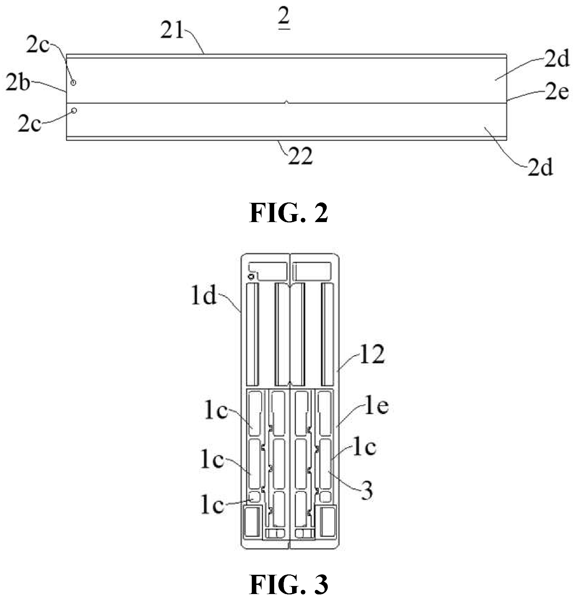

In one embodiment, referring to FIG. 1 and FIG. 2, the case 2 includes a first side plate 21, a second side plate 22, and a third side plate 23, with the first side plate 21 and the second side plate 22 connected to the two ends of the third side plate 23 along its width direction; both the first side plate 21 and the second side plate 22 are formed with a folded edge 2d at their ends away from the third side plate 23, and the two folded edges 2d overlap with each other to jointly define the placing cavity 2a.

By way of example, the shapes of the first side plate 21, the second side plate 22 and the third side plate 23 are not limited; for example, they can all be rectangular. The first side plate 21 and the second side plate 22 are connected to the two ends of the third side plate 23 along the width direction, so that the case 2 is approximately U-shaped. Both the first side plate 21 and the second side plate 22 are formed with a folded edge 2d at their ends away from the third side plate 23. The two folded edges 2d can overlap each other, that is, one folded edge 2d can overlap the other folded edge 2d. In this way, they can jointly enclose and define the placing cavity 2a.

In this way, during assembly, since the case 2 is U-shaped before mounting, the pouch cell connected with the top cover 1 can be placed into the case 2 through the opening of the U-shaped case 2. Then, the top surface of the case 2 is made abut against the bottom surface of the abutting plate 12. The position is adjusted so that the first mounting hole 2c and the second mounting hole 1b are aligned. After alignment, the folded edges 2d of the first side plate 21 and the second side plate 22 are overlapped. Finally, the fastener is made pass through the first mounting hole 2c and the second mounting hole 1b to connect the case 2 and the top shell. In this way, compared with directly inserting the pouch cell into the case with a placing cavity in the related technology, the embodiments of the present disclosure adopts the manner of enclosing and wrapping, which not only can reduce the damage of the case 2 to the pouch cell and improve the service life of the pouch cell, but also can make the assembly simple.

By way of example, in one embodiment, the first side plate 21, the second side plate 22 and the third side plate 23 may be connected by welding.

By way of example, in one embodiment, the first side plate 21, the second side plate 22 and the third side plate 23 can be an integrally formed plate, which is then bent by stamping or other manners to form the first side plate 21, the second side plate 22 and the third side plate 23, with high connection strength.

In one embodiment, the two folded edges 2d are connected by welding. In this way, by connecting the two folded edges 2d through welding, the connection strength between the two folded edges 2d can be improved, reducing the situation where the air tightness of the placing cavity 2a is reduced due to cracking, and resulting in good working stability.

By way of example, in one embodiment, the two folded edges 2d can also be connected by screws or glue.

In one embodiment, referring to FIG. 1 to FIG. 3, the case 2 is formed with a communication port 2e in communication with the placing cavity 2a. The mounting opening 2b and the communication port 2e are arranged along the top-bottom direction. The pouch battery 100 includes a bottom cover 4 and a shielding member 3. The bottom cover 4 is arranged to cover the communication port 2e. The top cover 1 is formed with a pressure relief port 1c that runs through the top-bottom direction. The shielding member 3 is arranged at the pressure relief port 1c. The pressure-bearing capacity of the case 2 and the pressure-bearing capacity of the bottom cover 4 are both greater than the pressure-bearing capacity of the shielding member 3.

By way of example, referring to FIG. 1 and FIG. 3, the top cover 1 is divided into a connecting region 1d and a pressure relief region 1e along the length direction. The connecting region 1d is provided with the conductive terminal 1a, and the pressure relief region 1e is formed with the pressure relief port 1c. The pressure relief port 1c runs through the two side surfaces of the top cover 1 along the top-bottom direction. After the top cover 1 is connected to the case 2, the placing cavity 2a can be in communication with the pressure relief port 1c. The bottom cover 4 is arranged to cover the communication port 2e, and the shielding member 3 is arranged at the pressure relief port 1c.

In this way, by setting the bottom cover 4 at the bottom communication port 2e and the shielding member 3 at the top pressure relief port 1c, impurities and hot ejected gases can be prevented from entering the placing cavity 2a and being transmitted to the pouch cell, thereby avoiding serious thermal runaway problems in the pouch battery 100. By setting the pressure-bearing capacity of the shielding member 3 to be less than that of the case 2 and of the bottom cover 4, when a pouch cell experiences thermal runaway, the ejected gas can first cause the shielding member 3 to rupture, thereby directionally directing the gas out from the pressure relief port 1c to avoid explosion or rupture of the pouch battery 100. The pressure relief port 1c and the conductive terminal 1a are located on the top cover 1, so that the pressure relief port 1c can be monitored and inspected at the same time as the conductive terminal 1a is monitored and inspected.

It should be noted that the pressure-bearing capacity can be determined by filling the placing cavity 2a with gas at a preset pressure, and then determining which of the case 2, the bottom cover 4 and the shielding member 3 ruptures first, indicating that its pressure-bearing capacity is the lowest.

By way of example, in one embodiment, the shape of the pressure relief port 1c is not limited; for example, it can be rectangular, square, or other irregular shapes.

By way of example, in one embodiment, the number of the pressure relief ports 1c is not limited. For instance, there can be twelve pressure relief ports 1c. This allows gas to be quickly discharged from the placing cavity 2a after thermal runaway occurs, ensuring high safety.

By way of example, in one embodiment, referring to FIG. 2, the pressure relief region 1e is provided with five second mounting holes 1b on both end faces along the width direction, and the connecting region 1d is provided with one second mounting hole 1b on both end faces along the width direction and on the side away from the pressure relief region 1e. Two second mounting holes 1b are provided on the end face of the pressure relief region 1e away from the connecting region 1d along the length direction, and two second mounting holes 1b are provided on the end face of the connecting region 1d away from the pressure relief region 1e along the length direction. In this way, by providing a small number of second mounting holes 1b in the connecting region 1d, electrical leakage problems can be avoided after the fastener passes through the second mounting holes 1b and makes contact with the conductive terminal 1a.

By way of example, in one embodiment, the portion of the connecting region 1d that is not connected to the top cover 1 by fasteners may be glued to improve the air tightness of the placing cavity 2a.

In one embodiment, both the shielding member 3 and the bottom cover 4 are made of mica, but the pressure-bearing capacity of mica of the shielding member 3 is less than that of mica of the bottom cover 4. The case 2 is made of metal or plastic.

By way of example, by setting the material of the shielding member 3 and the bottom cover 4 as mica and setting the material of the case 2 as metal or plastic, with the pressure-bearing capacity of the mica of the shielding member 3 being less than that of the mica of the bottom cover 4, when the pouch cell experiences thermal runaway, the gas can break through the shielding member 3 with lower pressure-bearing capacity and be ejected from the pressure relief port 1c, so as to achieve directional ejection of the pouch battery 100.

By way of example, in one embodiment, the pressure-bearing capacity of mica of the shielding member 3 is less than that of mica of the bottom cover 4. This can be addressed by adjusting the thickness. For example, the mica of the shielding member 3 can be made thinner, while the mica of the bottom cover 4 can be made thicker. Alternatively, the thickness can be reduced by providing notches on the mica of the shielding member 3. In this way, after a pouch cell experiences thermal runaway, it can be directed to eject energy towards the pressure relief port 1c.

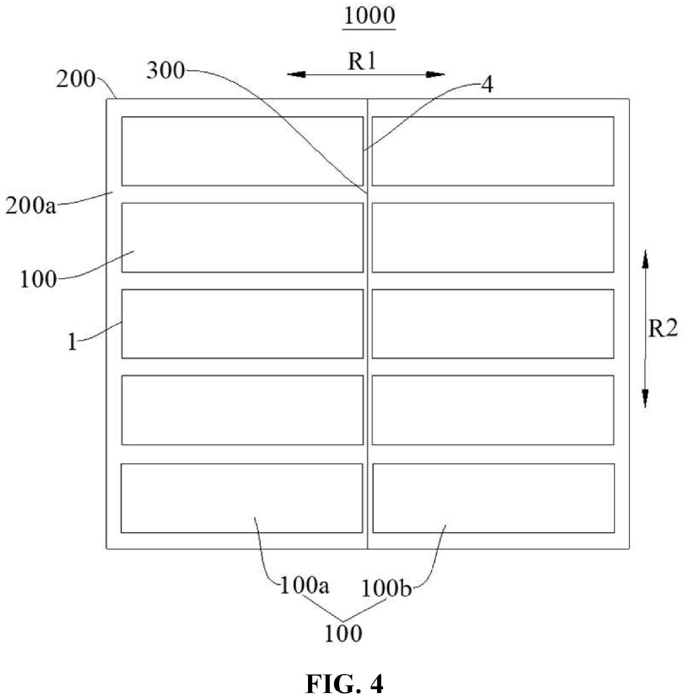

In another aspect, the embodiments of the present disclosure provide a battery pack 1000, referring to FIG. 4, the battery pack 1000 including a box body 200 and the pouch battery 100 according to any one of the aforementioned embodiments, wherein the box body 200 is formed with an accommodating cavity 200a, and the pouch battery 100 is located in the accommodating cavity 200a of the box body 200.

By way of example, the box body 200 includes an accommodating cavity 200a and a pick-and-place port in communication with the accommodating cavity 200a, and the pouch battery 100 can be placed into the accommodating cavity 200a through the pick-and-place port. There can be multiple pouch batteries 100. The multiple pouch batteries 100 may be in series connection, parallel connection or series-parallel connection to form a whole, and then the whole is placed into the accommodating cavity 200a. The battery pack 1000 may further include other structures. For example, the battery pack 1000 may further include a reflux component for realizing electrical connections between the multiple pouch batteries 100.

The parallel-series connection means that there is both series connection and parallel connection among the plurality of pouch batteries 100.

In the battery pack 1000 provided by the embodiments of the present disclosure, the fastener is used to connect the case 2 and the top cover 1 to form a pouch battery 100, and the pouch battery 100 is then placed inside the box body 200. This not only reduces the manufacturing cost of the battery pack 1000, but also simplifies assembly and improves production efficiency.

In one embodiment, referring to FIG. 1 to FIG. 3, the case 2 is formed with a communication port 2e in communication with the placing cavity 2a. The mounting opening 2b and the communication port 2e are arranged along the top-bottom direction. The pouch battery 100 includes a bottom cover 4, the bottom cover 4 is arranged to cover the communication port 2e, and the top cover 1 is formed with a pressure relief port 1c that runs through the top-bottom direction.

By setting the pressure relief port 1c on the top cover 1, with the pressure relief port 1c being in communication with the placing cavity 2a, when the pouch cell experiences thermal runaway, the high-temperature ejected material (hot ejected gas) can be directionally ejected out from the pressure relief port 1c, avoiding explosion or rupture of the pouch battery 100 and preventing the high temperature of the ejected material from being transferred to other pouch batteries 100 in the battery pack 1000, thereby ensuring high safety. The pressure relief port 1c and the conductive terminal 1a are located on the top cover 1, so that the pressure relief port 1c can be monitored and inspected at the same time as the conductive terminal 1a is monitored and inspected.

In one embodiment, referring to FIG. 4, the number of the pouch batteries 100 is at least two, wherein at least one pouch battery 100 is a first pouch battery 100a and at least one is a second pouch battery 100b, wherein the side of the first pouch battery 100a having conductive terminals 1a is disposed away from the side of the second pouch battery 100b having conductive terminals 1a.

The fact that the side of the first pouch battery 100a having conductive terminals 1a is disposed away from the side of the second pouch battery 100b having conductive terminals 1a means that the first pouch battery 100a and the second pouch battery 100b are arranged at intervals along the top-bottom direction and extend, the side surface of the first pouch battery 100a away from the second pouch battery 100b along the top-bottom direction has conductive terminals 1a, and the side surface of the second pouch battery 100b away from the first pouch battery 100a along the top-bottom direction has conductive terminals 1a.

In this way, the side surface of the first pouch battery 100a having conductive terminals 1a is disposed away from the side surface of the second pouch battery 100b having conductive terminals 1a. This can reduce the accumulation of high voltage at the conductive terminals 1a while achieving directional ejection, so as to avoid the risk of thermal runaway, short circuit or even explosion caused by the accumulation of high voltage of the first pouch battery 100a and the second pouch battery 100b, thus ensuring high safety.

In one embodiment, referring to FIG. 4, the first pouch battery 100a and the second pouch battery 100b are arranged along the top-bottom direction, and the numbers of the first pouch batteries 100a and the second pouch batteries 100b are both multiple. The multiple first pouch batteries 100a are arranged at intervals along the first direction, and the multiple second pouch batteries 100b are arranged at intervals along the first direction, wherein the top-bottom direction and the first direction are intersected.

By way of example, the number of the pouch batteries 100 can be twenty. Ten of the twenty pouch batteries 100 are first pouch batteries 100a, and the other ten of the twenty pouch batteries 100 are second pouch batteries 100b. The ten first pouch batteries 100a are arranged at intervals along a first direction, and the ten second pouch batteries 100b are arranged at intervals along the first direction. The first pouch batteries 100a and the second pouch batteries 100b are arranged at intervals along a top-bottom direction, wherein the top-bottom direction can be perpendicular to the first direction.

In this way, by the intersecting arrangement, the impact on other pouch batteries 100 in the battery pack 1000 can be reduced after thermal runaway occurs in a pouch battery 100.

In one embodiment, referring to FIG. 4, the battery pack 1000 further includes an insulating layer 300, the space between each first pouch battery 100a and the corresponding second pouch battery 100b is filled with the insulating layer 300, and the insulating layer 300 covers the first pouch battery 100a and the second pouch battery 100b respectively.

The insulating layer 300 is used to isolate the first battery 100a and the second pouch battery 100b to prevent the current from being transferred between the first pouch battery 100a and the second pouch battery 100b.

By way of example, the insulating layer 300 may be disposed between the side surface of the first pouch battery 100a away from its conductive terminal 1a and the side surface of the second pouch battery 100b away from its conductive terminal 1a.

In this way, by providing the insulating layer 300 between the side surface of the first pouch battery 100a away from its conductive terminal 1a and the side surface of the second pouch battery 100b away from its conductive terminal 1a, on the one hand, the first pouch battery 100a and the second pouch battery 100b are insulated from each other, reducing the possibility of short circuits between them; on the other hand, taking the first pouch battery 100a as an example, when a pouch cell experiences thermal runaway, since the pressure relief port 1c is located on the side of the first pouch battery 100a away from the insulating layer 300, as the ejected material is ejected from the pressure relief port 1c, it will exert a force on the first pouch battery 100a to move closer to the second pouch battery 100b. By providing the insulating layer 300, it can be blocked and supported to avoid affecting other pouch batteries 100.

By way of example, in one embodiment, the insulating layer 300 is made of insulating adhesive, which is in a liquid state before being filled. The liquid insulating adhesive can be cured between the first pouch battery 100a and the second pouch battery 100b. The operation is simple and the sealing is good. Since the side of the case 2 away from the pressure relief port 1c is closed, it is difficult for the liquid insulating adhesive to enter the placing cavity 2a.

In one embodiment, the cavity wall of the accommodating cavity 200a is formed with an exhaust flow channel and an exhaust vent. The exhaust flow channel is in communication with the accommodating cavity 200a through the exhaust vent, and the exhaust vent is located on the side of the cavity wall of the accommodating cavity 200a facing the accommodating cavity 200a.

An exhaust flow channel is a passage used to discharge gas, and its flow cross-section can be a regular square, a circle, etc. The flow cross-section refers to the cross section taken perpendicular to the streamline cluster of the fluid.

The exhaust vent is a hole used to connect the accommodating cavity 200a with the exhaust flow channel, and its shape can be circular, square, etc.

By way of example, the exhaust vent and the exhaust flow channel can be provided on the cavity wall of the accommodating cavity 200a along the top-bottom direction near the pressure relief port 1c.

In this way, after the pouch cell experiences thermal runaway, the ejected material is discharged from the pressure relief port 1c into the accommodating cavity 200a, and then enters the exhaust flow channel through the exhaust vent to be discharged, thereby extending the gas flow path and avoiding the situation where the ejected material forms a flame at the end of the exhaust flow channel away from the exhaust vent due to excessive temperature and too short exhaust distance, thus ensuring high safety.

In one embodiment, the first pouch battery 100a and the second pouch battery 100b are arranged along the top-bottom direction, and the exhaust vent is located on the cavity walls of the accommodating cavity 200a on opposite sides along the top-bottom direction.

In other words, exhaust vents are provided on the cavity walls on two opposite sides of the accommodating cavity 200a along the top-bottom direction. In this way, after thermal runaway occurs, both the first pouch battery 100a and the second pouch battery 100b have corresponding exhaust vents to discharge gas into the exhaust flow channel, so the safety is higher.

In one embodiment, the battery pack 1000 further includes an explosion-proof valve, and the explosion-proof valve is provided on one or both sides of the box body 200 along the first direction, with the first direction, the second direction and the top-bottom direction intersecting with each other.

By way of example, a pressure relief port 1c in communication with the exhaust flow channel is formed on one or both sides of the box body 200 along the first direction, and an explosion-proof valve is provided at the pressure relief port 1c. The first direction, the second direction, and the top-bottom direction intersecting with each other may be that the top-bottom direction, the first direction, and the second direction are perpendicular to each other.

In this way, after thermal runaway occurs in a pouch cell, the ejected material is discharged from the pressure relief port 1c into the accommodating cavity 200a, and then enters the exhaust flow channel through the exhaust vent. When the gas pressure in the accommodating cavity 200a reaches the explosion pressure of the explosion-proof valve, the explosion-proof valve will open the pressure relief port 1c to relieve pressure in the accommodating cavity 200a and avoid explosion, thus improving the operational safety of the battery pack 1000. It should be noted that burst pressure refers to the maximum explosion pressure that the explosion-proof valve can withstand when it is closed.

In the pouch battery 100 provided in the embodiments of the present disclosure, the pouch battery 100 includes a pouch cell, a top cover 1, a case 2, and a fastener. The case 2 is formed with a placing cavity 2a and a mounting opening 2b in communication with the placing cavity 2a. The pouch cell is disposed in the placing cavity 2a, and the top cover 1 is arranged to cover the mounting opening 2b. The case 2 is formed with a first mounting hole 2c, and the top cover 1 is formed with a second mounting hole 1b. The second mounting hole 1b is an oblong hole. The fastener is a rivet, which passes through the first mounting hole 2c and the second mounting hole 1b to connect the top cover 1 and the case 2 through riveting. There are multiple first mounting holes 2c, multiple second mounting holes 1b, and multiple fasteners. The multiple first mounting holes 2c are circumferentially spaced and arranged on the case 2, and the multiple second mounting holes 1b are correspondingly arranged on the top cover 1. Each fastener passes through the corresponding first mounting hole 2c and the corresponding second mounting hole 1b. The top cover 1 includes a cover body 11 and an abutting plate 12. The abutting plate 12 is connected to the top surface of the cover body 11. The projection area of the cover body 11 along the top-bottom direction is located within the projection area of the abutting plate 12. The second mounting hole 1b is formed in the cover body 11 near the abutting plate 12. When the first mounting hole 2c and the second mounting hole 1b are aligned, the cover body 11 is located in the placing cavity 2a, and the top surface of the case 2 abuts against the bottom surface of the abutting plate 12. The case 2 includes a first side plate 21, a second side plate 22, and a third side plate 23, with the first side plate 21 and the second side plate 22 connected to the two ends of the third side plate 23 along its width direction; both the first side plate 21 and the second side plate 22 are formed with a folded edge 2d at their ends away from the third side plate 23, and the two folded edges 2d overlap with each other and connected by welding to jointly define the placing cavity 2a. The case 2 is formed with a communication port 2e in communication with the placing cavity 2a. The mounting opening 2b and the communication port 2e are arranged along the top-bottom direction. The pouch battery 100 includes a bottom cover 4. The bottom cover 4 is arranged to cover the communication port 2e. The top cover 1 is formed with a pressure relief port 1c that runs through the top-bottom direction. The pouch battery 100 includes a shielding member 3, and the shielding member 3 is arranged at the pressure relief port 1c. The pressure-bearing capacity of the case 2 and the pressure-bearing capacity of the bottom cover 4 are both greater than the pressure-bearing capacity of the shielding member 3. Both the shielding member 3 and the bottom cover 4 are made of mica, but the pressure-bearing capacity of mica of the shielding member 3 is less than that of mica of the bottom cover 4. The case 2 is made of metal or plastic.

The above embodiments are only used to illustrate the technical solutions of the present disclosure, but are not limited thereto. Although the present disclosure is described in detail with reference to the above embodiments, those of ordinary skill in the art should understand that the technical solutions recorded in the above embodiments still can be modified, or some or all of the technical features thereof can be replaced equivalently. These modifications or replacements do not make the essence of the corresponding technical solution depart from the scope of the technical solution of each embodiment of the present disclosure, and shall fall within the scope of the specification of the present disclosure. In particular, the technical features mentioned in the various embodiments may be combined in any manner as long as there is no structural conflict.

## Claims

1. A pouch battery, comprising:
a pouch cell;
a top cover, where tabs of the pouch cell are electrically connected to conductive terminals of the top cover;
a case, which is formed with a placing cavity and a mounting opening in communication with the placing cavity, wherein the pouch cell is arranged in the placing cavity, and the top cover is arranged to cover the mounting opening; and
a fastener, which passes through the case and the top cover to connect the case and the top cover.

2. The pouch battery according to claim 1, wherein the case is formed with a first mounting hole, the top cover is formed with a second mounting hole, and the fastener passes through the first mounting hole and the second mounting hole to connect the top cover and the case.

3. The pouch battery according to claim 2, wherein the numbers of the first mounting holes, the second mounting holes and the fasteners are all at least two, the at least two first mounting holes are circumferentially spaced and arranged on the case, the at least two second mounting holes are correspondingly arranged on the top cover, and each of the fasteners passes through the corresponding first mounting hole and the corresponding second mounting hole.

4. The pouch battery according to claim 2, wherein the fastener is a rivet, and the rivet connects the top cover and the case by riveting.

5. The pouch battery according to claim 2 or 3, wherein the second mounting hole is an oblong hole.

6. The pouch battery according to claim 2, 3 or 5, wherein the top cover comprises a cover body and an abutting plate, the abutting plate is connected to the top surface of the cover body, the projection area of the cover body along a top-bottom direction is located within the projection area of the abutting plate, the second mounting hole is formed in the cover body near the abutting plate, and when the first mounting hole and the second mounting hole are aligned, the cover body is located in the placing cavity, and the top surface of the case abuts against the bottom surface of the abutting plate.

7. The pouch battery according to any one of claims 1 to 6, wherein the case comprises a first side plate, a second side plate and a third side plate, the first side plate and the second side plate being connected to both ends of the third side plate along its width direction; both the first side plate and the second side plate are formed with a folded edge at their ends away from the third side plate, and the two folded edges overlap with each other to jointly define the placing cavity.

8. The pouch battery according to claim 7, wherein the two folded edges are connected by welding.

9. The pouch battery according to any one of claims 1 to 8, wherein the case is formed with a communication port in communication with the placing cavity, the mounting opening and the communication port are arranged along the top-bottom direction, the pouch battery comprises a bottom cover and a shielding member, the bottom cover is arranged to cover the communication port, the top cover is formed with a pressure relief port that runs through the top-bottom direction, the shielding member is arranged at the pressure relief port, and the pressure-bearing capacity of the case and the pressure-bearing capacity of the bottom cover are both greater than the pressure-bearing capacity of the shielding member.

10. The pouch battery according to claim 9, wherein both the shielding member and the bottom cover are made of mica, the pressure-bearing capacity of mica of the shielding member is less than that of mica of the bottom cover, and the case is made of metal or plastic.

11. A battery pack comprising a box body and the pouch battery according to any one of claims 1 to 8, wherein the box body is formed with an accommodating cavity, and the pouch battery is located in the accommodating cavity.

12. The battery pack according to claim 11, wherein the case is formed with a communication port in communication with the placing cavity, the mounting opening and the communication port are arranged along the top-bottom direction, the pouch battery comprises a bottom cover, the bottom cover is arranged to cover the communication port, and the top cover is formed with a pressure relief port that runs through the top-bottom direction.

13. The battery pack according to claim 11 or 12, wherein the number of the pouch batteries is at least two, at least one of the pouch batteries is a first pouch battery and at least one is a second pouch battery, and the side of the first pouch battery having the conductive terminals is disposed away from the side of the second pouch battery having the conductive terminals.

14. The battery pack according to claim 13, wherein the first pouch battery and the second pouch battery are arranged along the top-bottom direction, the numbers of the first pouch batteries and the second pouch batteries are both multiple, the multiple first pouch batteries are arranged at intervals along a first direction, and the multiple second pouch batteries are arranged at intervals along the first direction, wherein the top-bottom direction and the first direction are intersected.

15. The battery pack according to claim 13 or 14, wherein the battery pack further comprises an insulating layer, the space between each of the first pouch batteries and the corresponding second pouch battery is filled with the insulating layer, and the insulating layer covers the first pouch battery and the second pouch battery respectively.

16. The battery pack according to any one of claims 13 to 15, wherein a cavity wall of the accommodating cavity is formed with an exhaust flow channel and an exhaust vent, the exhaust flow channel is in communication with the accommodating cavity through the exhaust vent, and the exhaust vent is located on the side of the cavity wall of the accommodating cavity facing the accommodating cavity.

17. The battery pack according to claim 16, wherein the first pouch battery and the second pouch battery are arranged along the top-bottom direction, and the exhaust vent is located on the cavity walls of the accommodating cavity on opposite sides along the top-bottom direction.

18. The battery pack according to claim 17, wherein the battery pack further comprises an explosion-proof valve, and the explosion-proof valve is provided on one or both sides of the box body along a second direction, wherein the first direction, the second direction and the top-bottom direction intersect with each other.
